# EUROPÄISCHE PATENTSCHRIFT

(11) **EP 1 619 398 B1**
(45) Veröffentlichungstag und Bekanntmachung des Hinweises auf die Patenterteilung: **02.05.2007**
(21) Anmeldenummer: 04017534.1
(22) Anmeldetag: 23.07.2004
(51) Int. Cl.: F16C 1/22, B60T 7/10, B60T 13/74

(54) **Stelleinrichtung, insbesondere Kraftfahrzeugfeststellbremse**
Positioning device, especially motor vehicle parking brake
Dispositif de positionnement, en particulier frein de stationnement d'un véhicule

(43) Veröffentlichungstag der Anmeldung: 25.01.2006
(73) Patentinhaber: SIEMENS AKTIENGESELLSCHAFT, 80333 München (DE)
(72) Erfinder: Deutloff, Norbert, 97291 Thüngersheim (DE); Kraft, Ekkehard, 97282 Retzstadt (DE); Roos, Stephan, 97877 Wertheim (DE); Sauer, Armin, 97450 Arnstein-Schwebenried (DE)

(56) Entgegenhaltungen:
- EP-A- 0 556 064
- EP-A- 1 304 491
- WO-A-98/56633
- DE-A- 10 102 685
- DE-A- 10 202 730

## Beschreibung

Die Erfindung betrifft eine Stelleinrichtung, insbesondere eine Kraftfahrzeug-Feststellbremse, mit einer einen fremdkraftbetriebenen Antrieb aufweisenden Stelleinheit.

Während des Betriebes einer Feststellbremse ist es aufgrund von Verschleiß, beispielsweise der Bremsbacken, oder Setzverhalten, beispielsweise des Bremsseiles, erforderlich, die Bremsseillänge nachzustellen. Damit sollen im Wesentlichen unnötige Seilwege beim Anziehen des Bremsseils vermieden werden, damit das Bremsseil schnell und sicher angezogen werden kann.

Aus dem Stand der Technik sind hierzu mechanische Nachstellvorrichtungen bekannt, die zumeist in den Kraftfluss des Bremszuges nach Art einer "mechanischen Reihenschaltung" eingebaut werden. Das Grundprinzip derartiger Nachstellvorrichtungen beruht darauf, dass zwei Zähne ineinander greifen und die Seilkraft übertragen. Sobald die Zähne nicht mehr ineinander greifen, wird der Kraftfluss unterbrochen. In der Regel ist dabei der eine Zahn als Zahnstange und der andere Zahn als Klinke ausgeführt. Je nach Verschleiß greift dabei die Klinke in einen bestimmten Zahn der Zahnstange ein.

Bei fremdkraftbetätigten Feststellbremsen, beispielsweise bei elektromotorischen Parkbremsen mit Spindelantrieb, erfolgt die Nachstellung über eine Wegmessung in Verbindung mit einer entsprechenden Ansteuerung des Antriebs. Von Nachteil dabei ist, dass Wegmessung und Ansteuerung des Antriebs aufwändige und verhältnismäßig teure sowie fehleranfällige Bauteile erfordern.

Aufgabe der Erfindung ist es, eine Stelleinrichtung, insbesondere eine Kraftfahrzeug-Feststellbremse, mit einer einen fremdkraftbetriebenen Antrieb aufweisenden Stelleinheit bereitzustellen, die einen einfachen Seilausgleich ermöglicht.

Diese Aufgabe wird durch eine Stelleinrichtung nach Anspruch 1 gelöst. Vorteilhafte Ausführungsformen der Erfindung sind in den Unteransprüchen angegeben.

Die erfindungsgemäße Stelleinrichtung weist auf: eine einen fremdkraftbetätigten Antrieb aufweisende Stelleinheit, eine in einem Gehäuse oder dergleichen in Längsachse der Stelleinheit axial verschiebbare Teleskopvorrichtung, aufweisend eine Hohlwelle und eine mit dieser in axialer Dreh-Vorschubverbindung stehende, einen Bremszug betätigende Spindelwelle, eine Antriebsverbindung zwischen dem fremdkraftbetätigten Antrieb und der Hohlwelle, eine axiale Vorschubabstützung zwischen der Hohlwelle einerseits und dem Gehäuse andererseits über ein relativ zu der Spindelwelle und dem Bremszug stationäres und in Richtung der Hohlwelle parallel angeordnetes, durch die Vorschubabstützung axial belastetes und dadurch axial längenverformbares, elastisches Element.

Eine Stelleinrichtung mit diesen Merkmalen ist aus der Offenlegung DE 103 61 127 und dem Dokument WO 98/56633 bekannt.

Gemäß der vorliegenden Erfindung weist die Stelleinrichtung zusätzlich zu der aus der älteren Patentanmeldung bekannten Stelleinrichtung einen drehfesten axialen Anschlag zum Begrenzen der Drehbewegung der Hohlwelle auf. Die Drehbewegung der Hohlwelle wird dabei bei einem Lösen des Bremszuges beim Erreichen einer bestimmten, durch das elastische Element definierten Seilvorspannkraft gestoppt.

Ein Grundgedanke der Erfindung liegt darin, auch bei fremdkraftbetätigten Feststellbremsen einen Seilausgleich vorzusehen, der im Wesentlichen auf einem mechanischen System beruht. Komplizierte und teure bzw. fehleranfällige Schritte, wie Wegmessungen und Ansteuerungen des Antriebs, können somit stark reduziert werden bzw. ganz entfallen.

Erfindungsgemäß ist es vorgesehen, eine mechanische Nachstellvorrichtung in den Spindelantrieb der den Bremszug betätigenden Spindelwelle zu integrieren. Durch die einfache konstruktive Ausführung ist keine Regelung für das Einstellen einer bestimmten Lösekraft des Bremszuges erforderlich. Vielmehr ist bei gelöstem Bremszug stets eine definierte Mindest-Seilvorspannkraft vorhanden.

Dies wird konstruktiv dadurch erreicht, dass die Hohlwelle beim Lösevorgang durch das längenverformbare, elastische Element gegen den axialen Anschlag gedrückt wird, wenn die Seilkraft, also die am Bremszug wirkende Kraft, kleiner als die Vorspannkraft des elastischen Elements wird. Die Größe der Seilvorspannkraft kann durch die Auswahl des elastischen Elements je nach Anwendungsfall eingestellt werden.

Mit anderen Worten wird vorgeschlagen, beim Lösen der Feststellbremse eine Hohlwelle in Abhängigkeit von der Federkraft eines elastischen Elementes gegen einen drehfesten Anschlag zu fahren. Aufgrund der axialen Position des Anschlages ist damit gewährleistet, dass stets eine ausreichende Seilvorspannkraft vorliegt.

Die Erfindung sowie weitere vorteilhafte Ausgestaltungen gemäß den Unteransprüchen sind im Folgenden anhand schematisch dargestellter Ausführungsbeispiele beschrieben, die anhand von Zeichnungen näher erläutert werden. Dabei zeigen:
- FIG 1: eine erste Ausführungsform einer Stelleinrichtung mit angezogenem Bremszug in Längsschnitt,
- FIG 2: die Stelleinrichtung gemäß FIG 1 in einer perspektivischen Darstellung mit teilweise aufgeschnittenem Gehäuse,
- FIG 3: eine vergrößerte Teilansicht aus FIG 2,
- FIG 4: die Stelleinrichtung gemäß FIG 1 mit gelöstem Bremszug in Längsschnitt,
- FIG 5: die Stelleinrichtung gemäß FIG 4 in einer perspektivischen Darstellung mit teilweise aufgeschnittenem Gehäuse,
- FIG 6: eine vergrößerte Teilansicht aus FIG 5,
- FIG 7: eine zweite Ausführungsform einer Stelleinrichtung mit gelöstem Bremszug in Längsschnitt,
- FIG 8: eine dritte Ausführungsform einer Stelleinrichtung mit gelöstem Bremszug in Längsschnitt,
- FIG 9: eine vierte Ausführungsform einer Stelleinrichtung mit angezogenem Bremszug in Längsschnitt,
- FIG 10: die Stelleinrichtung gemäß FIG 9 in einer perspektivischen Darstellung mit teilweise aufgeschnittenem Gehäuse,
- FIG 11: eine vergrößerte Teilansicht aus FIG 10,
- FIG 12: die Stelleinrichtung gemäß FIG 9 mit gelöstem Bremszug in Längsschnitt,
- FIG 13: die Stelleinrichtung gemäß FIG 12 in einer perspektivischen Darstellung mit teilweise aufgeschnittenem Gehäuse,
- FIG 14: eine vergrößerte Teilansicht aus FIG 13.

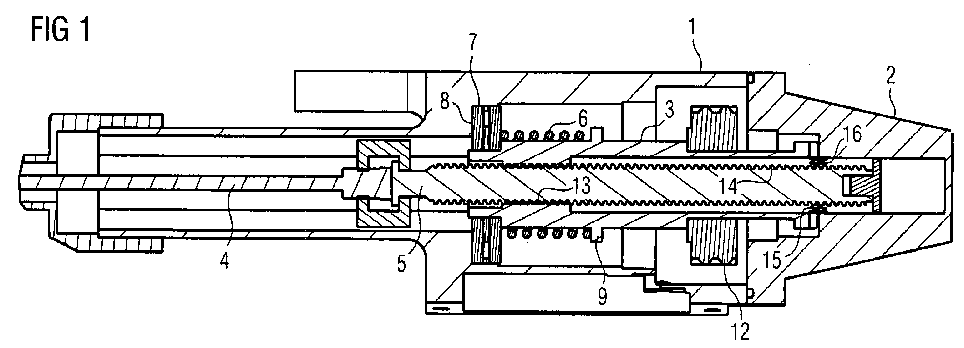

Wie in FIG 1 dargestellt, wird von einem Gehäuse 1 mit einem axial abschließenden Gehäusedeckel 2 eine axial verschiebbare Teleskopvorrichtung aufgenommen mit einer Hohlwelle 3 und einer mit dieser in axialer Dreh-Vorschubverbindung stehende, einen Bremszug 4 betätigende, an ihrem linken Ende mit einem Bremszug 4 verbundene Spindelwelle 5.

Als Vorschubabstützung der Hohlwelle 3 ist ein elastisches Element 6 in Form einer der Hohlwelle 3 bzw. der Spindelwelle 5 konzentrisch umfassenden Schraubenfeder vorgesehen, die als Druckfeder mit ihrem einen Ende über ein feststehendes Axialdrucklager 7 an einer Schulter 8 des Gehäuses 1 und mit ihrem anderen axialen Ende an einem umlaufenden Kragen 9 der Hohlwelle 3 anliegt.

FIG 1 zeigt eine Bremsstellung mit angezogenem Bremszug. Beim Antrieb der Teleskopvorrichtung im Sinne einer Bewegung des Bremszuges 4 nach rechts, d. h. im Sinne eines Festziehens einer, hier nicht näher dargestellten Kraftfahrzeug-Feststellbremse, wird das elastische Element 6 unter Andruck gegen das Axiallager 7 komprimiert.

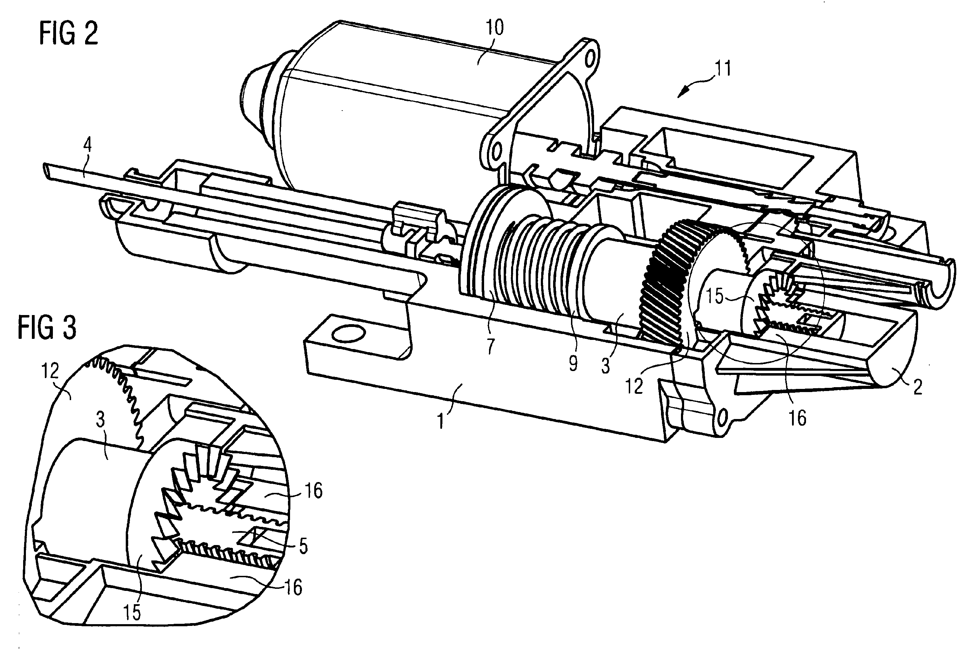

Die Übertragung eines Drehmomentes erfolgt dabei von einem Elektromotor 10 einer Stelleinheit 11 (vgl. FIG 2) über ein nicht näher dargestelltes Getriebe hin zu einem axial verschieblich mit der Hohlwelle 3 in fester Antriebsverbindung stehenden Antriebsgetrieberad 12 in Form eines Zahnrades. Die durch das Antriebsgetrieberad 12 in Drehung versetzte Hohlwelle 2 weist ein Innengewinde 13 auf. Über dieses Innengewinde 13 wird über das kämmende Außengewinde 14 der Spindelwelle 5 eine axiale Vorschubbewegung der Spindelwelle 5 erzielt.

An dem Bremszug 4 gegenüberliegenden axialen Ende der Hohlwelle 3 ist ein Anschlagselement 15 in Form einer am Hohlwellenrand umlaufenden Trapezverzahnung angebracht, vgl. FIG 2. Der Gehäusedeckel 2 ist nach Art einer Buchse zur Aufnahme der Spindelwelle 5 ausgebildet. Am Buchsenrand ist ein ebenfalls nach Art einer Trapezverzahnung ausgestalteter Anschlag 16 angeordnet zum Zusammenwirken mit dem Anschlagselement 15 der Hohlwelle 3. Die Trapezverzahnung im Gehäusedeckel 2 ist aus zeichnerischen Gründen nicht vollständig abgebildet. Aufgrund der verwendeten unsymmetrischen sägezahnartigen Verzahnung ist eine Linksdrehung nicht möglich, während eine Rechtsdrehung, also ein Wiederanziehen der Feststellbremse jederzeit erfolgen kann.

Im angezogenen Zustand ist die Trapezverzahnung nicht eingerastet, so dass eine Drehbewegung der Hohlwelle 3 in beide Richtungen möglich ist, vgl. FIG 3.

Zum Lösen des Bremszuges erfolgt über den Elektromotor 10 eine Drehung der Hohlwelle 3 nach links, so dass sich die Spindelwelle 5 nach links bewegt. Mit zunehmendem Löseweg nimmt die am Bremszug 4 wirkende Last ab. Gleichzeitig entspannt sich das elastische Element 6. Durch die Entlastung wird die Hohlwelle 3 einschließlich des Antriebsgetrieberades 12 mittels Federkraft des elastischen Elements 6 nach rechts in Richtung Anschlag 16 gedrückt.

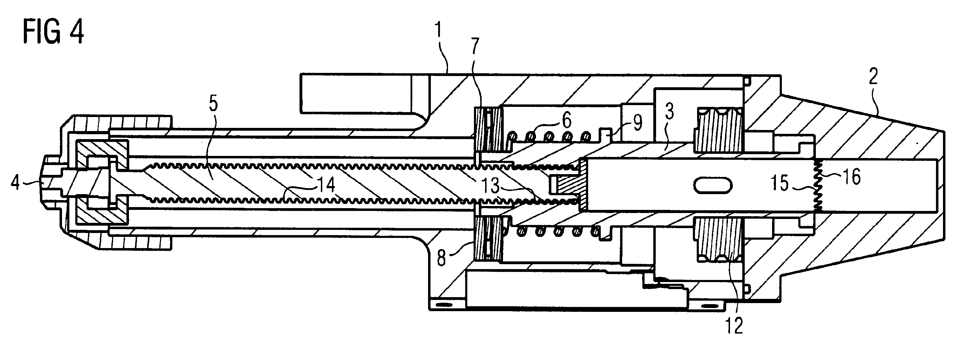

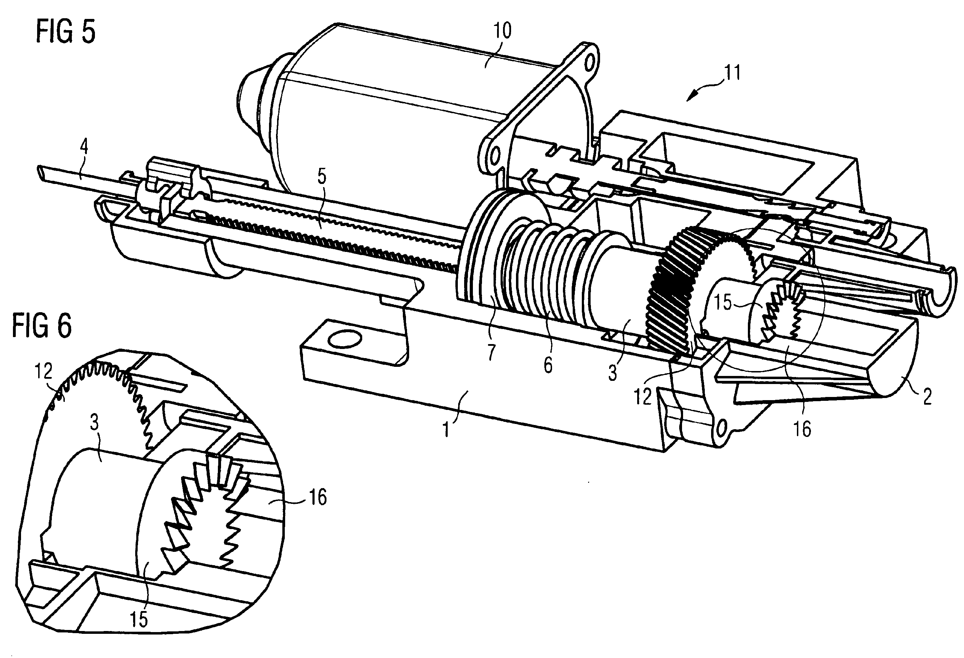

Wird die am Bremszug 4 wirkende Kraft (Seilkraft) kleiner als die Vorspannkraft des sich am Axiallager 7 abstützenden elastischen Elements 6 (Federkraft), wird die Hohlwelle 3 mit ihrem Anschlagselement 15 gegen den Anschlag 16 am Gehäusedeckel 2 gedrückt, vgl. FIG 4. Durch die spezielle Ausgestaltung des Anschlagsmechanismus wird eine weitere Drehbewegung in Löserichtung verhindert und somit eine definierte Seilkraft nicht unterschritten. In den FIG 5 und 6 ist die eingerastete Trapezverzahnung abgebildet.

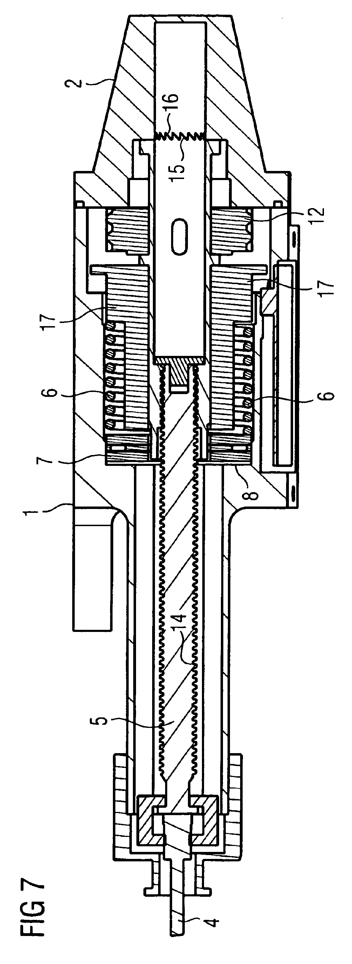

FIG 7 zeigt eine weitere Ausführungsform einer Stelleinrichtung bei gelöstem Bremszug 4, bei der ein mit der Hohlwelle 3 verbundener Geber 17 vorgesehen ist. Das elastische Element 6 stützt sich dabei zwischen dem Axiallager 7 und dem Geber 17 ab, so dass der Geber 17 zur Ermittlung des bereits zurückgelegten Federweges und damit zur axialen Lage der Hohlwelle 3 dienen kann. Diese Information wird vorzugsweise verwendet, um ein weiches Einrasten der Trapezverzahnung am Anschlag 16 zu gewährleisten. Hierzu erfolgt eine Ansteuerung des Elektromotors 10 beispielweise derart, dass die Drehzahl bzw. die Verstellgeschwindigkeit kurz vor dem Anschlag 16 verringert wird.

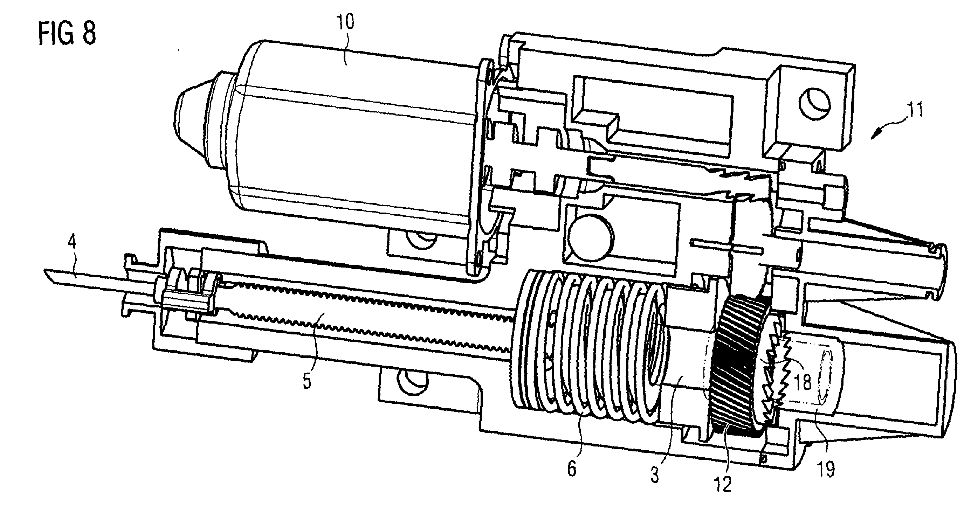

FIG 8 zeigt eine weitere Ausführungsform in gelöster Stellung, bei der ein Anschlagselement 18 nicht direkt an der Hohlwelle 3, sondern an dem Antriebsgetrieberad 12 angebracht ist. Entsprechend ist auch der Anschlag 16 im Gehäusedeckel 2 an einer die Hohlwelle 3 umgreifenden Buchse 19 ausgebildet. Das Antriebsgetrieberad 12 ist in dieser Ausführungsform fest mit der Hohlwelle 3 verbunden. Besonders vorteilhaft bei dieser Ausführungsform ist die gute Herstellbarkeit des Anschlagselementes 18 im Zusammenhang mit der Fertigung des Antriebsgetrieberades 12.

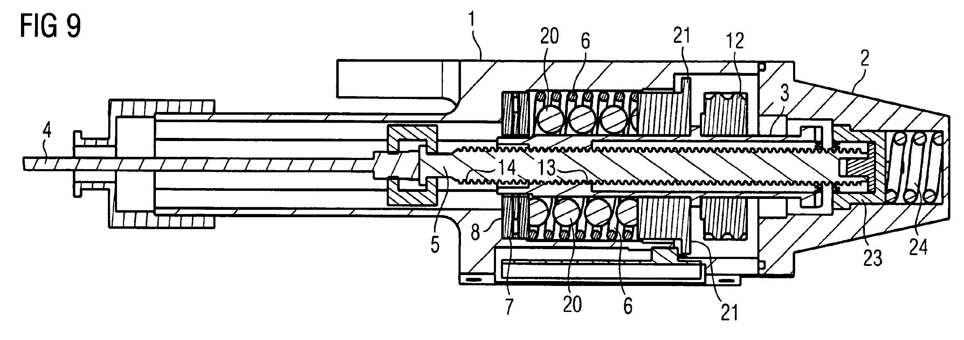

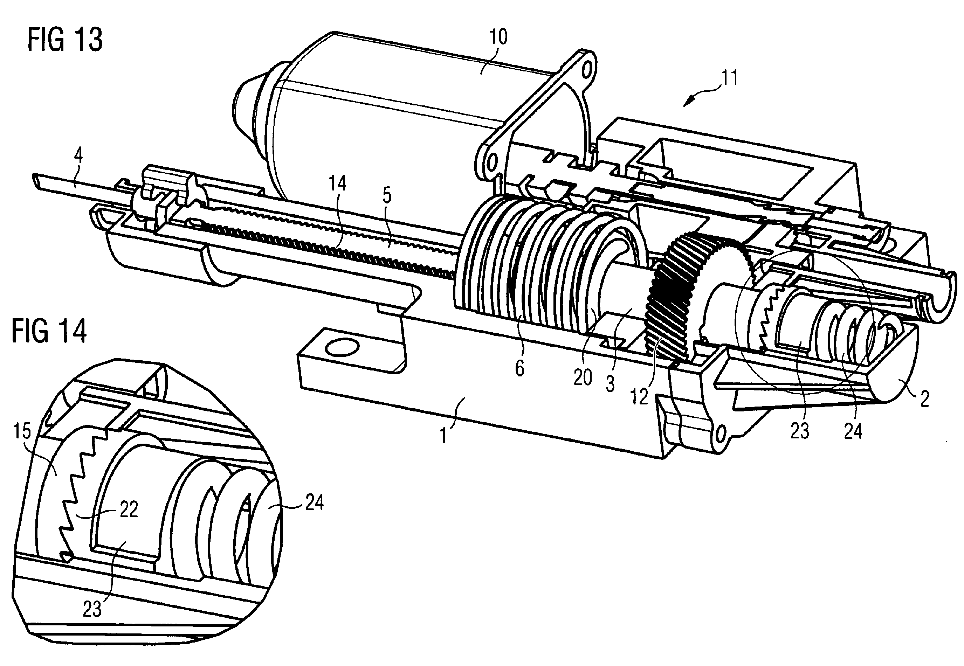

Die FIG 9 bis 14 zeigen eine weitere Ausführungsform der Stelleinrichtung. Diese unterscheidet sich von den vorherigen Ausführungsformen zum einen dadurch, dass neben dem ersten elastischen Element 6, welches als Feder für die Vorspannkraft des Bremszuges 4 dient, ein zweites elastisches Element 20 vorgesehen ist. Dieses zweite elastische Element 20, das ebenfalls in Form einer Schraubenfeder ausgebildet ist, dient als Feder für einen Kraftsensor. Sowohl das erste, als auch das zweite elastische Element 6, 20 stützen sich dabei am Axiallager 7 einerseits und an dem Sensorgeber 21 des Kraftsensors andererseits ab, der an der Hohlwelle 3 angeordnet ist. Bei einem Anziehen bzw. Lösen der Feststellbremse bewegt sich die Hohlwelle 3 und damit auch der Sensorgeber 21 axial nach links bzw. rechts. Der dabei zurückgelegte Weg wird über den Sensorgeber 21 detektiert und stellt ein Maß für die von dem Elektromotor 10 über das Antriebsgetrieberad 12, die Hohlwelle 3 und die Spindelwelle 5 auf den Bremszug 4 ausgeübte Anzugskraft bzw. Bremskraft. Aus diesen Weginformationen können mit anderen Worten Rückschlüsse über die Seilkraft im angezogenen Zustand gezogen werden.

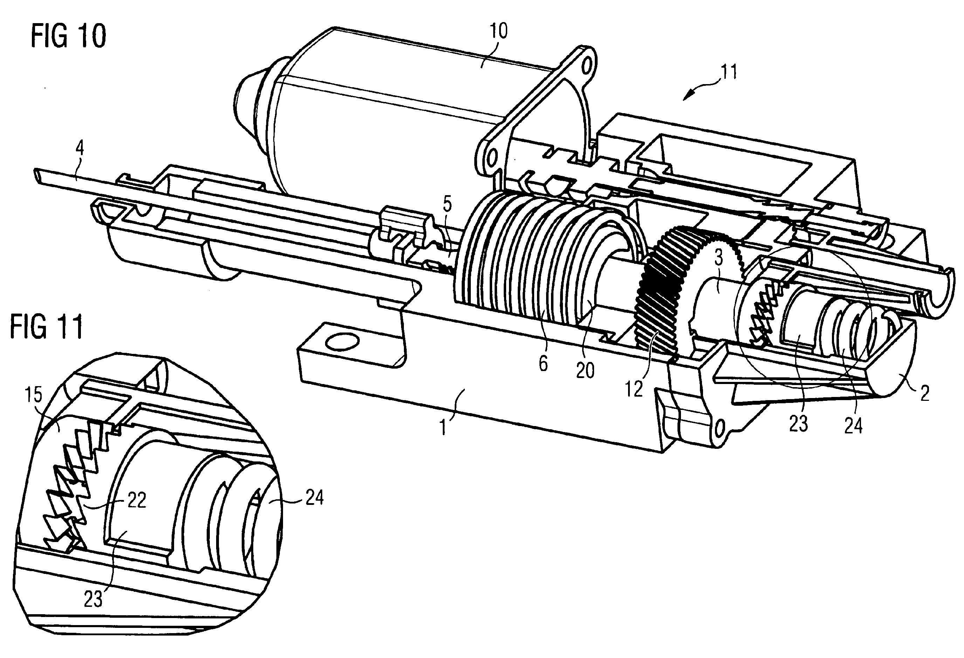

Darüber hinaus unterscheidet sich diese Ausführungsform dadurch, dass der Anschlag 22 im Gehäusedeckel 2 nicht ortsfest, sondern an einem axial beweglichen buchsenartigen Gegenelement 23 ausgebildet. Bei der in FIG 9 gezeigten Bremsstellung drückt die Spindelwelle 5 das Gegenelement 23 nach rechts gegen die Federkraft eines dritten elastischen Elements 24, welches ebenfalls als Schraubenfeder ausgebildet ist und sich an dem Gegenelement 23 einerseits und an dem Gehäusedeckel 2 andererseits abstützt. In den FIG 10 und 11 wird die Bremsstellung mit ihrer gelösten Trapezverzahnung dargestellt.

Bei einem blockierten Bremszug rastet die Trapezverzahnung weiter rechts ein, da die Spindelwelle 5 das Gegenelement 23 aufgrund der Abstützung am Bremszug 4 nach rechts drückt. Dadurch ist die Lage des Sensorgebers 21 verschieden von dessen Lage im Fall eines gelösten Bremszuges. Somit ist es möglich, die Blockierung eines Bremszuges 4 beim Lösen zu erkennen. Die Blockierung kann dem Fahrer des Kraftfahrzeugs beispielsweise über eine Kontrollleuchte angezeigt werden.

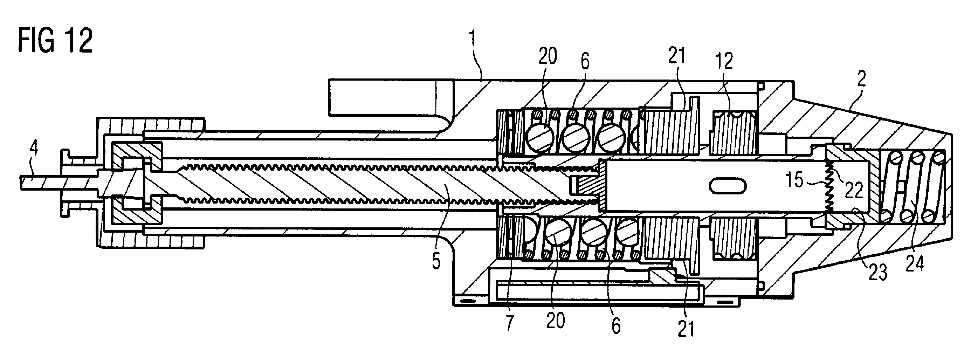

Beim Lösen der Bremsstellung bewegt sich die Spindelwelle 5 nach links und entlastet das Gegenelement 23, so dass sich das dritte elastische Element 24 entspannt. Die Hohlmutter 3 verfährt dabei wieder nach rechts, vgl. FIG 12. Wird die Seilkraft kleiner als die Federkraft des zweiten elastischen Elements 20, rastet das Anschlagselement 15 am Gegenelement 24 ein und ein Weiterdrehen in Löserichtung wird unterbunden.

Ist der Bremszug 4 beim Lösen blockiert, würde sich auch die Spindelwelle 5 beim Lösen nicht nach links bewegen. Der Sensorgeber 21 würde sich daher weiter nach rechts bewegen, als dies bei einem nichtblockierten Bremszug der Fall wäre. Eine Erkennung der Blockierung wäre auf einfache Art und Weise durch Auswertung des Wegsignals des Sensorgebers 21 möglich.

Das Federsystem aus erstem, zweitem und drittem elastischen Element 6, 20, 24 ist dabei auf den Anwendungsfall derart angepasst, dass verschiedenen Wegpunkten des axialen Weges der Hohlwelle 3 verschiedene resultierende Federstärken zugeordnet sind. So wird beispielsweise ein erster Wegpunkt "Seil gelöst" mit dem Ausser-Eingriff-Treten des zweiten elastischen Elements 20 definiert. Von diesem Zeitpunkt an wird die Hohlwelle 3 nur noch durch das erste elastische Element 6 abgestützt, welche die Hohlwelle 3 gegen den Anschlag drückt. Das Erreichen des Anschlages definiert dann einen zweiten Wegpunkt "Anschlag mit definierter Seilvorspannkraft". Ist der Anschlagspunkt versetzt, da das dritte elastische Element 24 gegen das erste elastische Element 6 drückt, wird dadurch ein weiterer Wegpunkt "versetzter Anschlag" definiert.

## Patentansprüche

1. Stelleinrichtung, insbesondere Kraftfahrzeug-Feststellbremse,
- mit einer einen fremdkraftbetätigten Antrieb (10) aufweisenden Stelleinheit (11),
- mit einer in einem Gehäuse (1) oder dergleichen in Längsachse der Stelleinheit (11) axial verschiebbaren Teleskopvorrichtung, aufweisend eine Hohlwelle (3) und eine mit dieser in axialer Dreh-Vorschubverbindung stehenden, einen Bremszug (4) betätigenden Spindelwelle (5),
- mit einer Antriebsverbindung (12) zwischen dem fremdkraftbetätigten Antrieb (10) und der Hohlwelle (3),
- mit einer axialen Vorschubabstützung zwischen der Hohlwelle (3) einerseits und dem Gehäuse (1) andererseits über ein relativ zu der Spindelwelle (5) und dem Bremszug (4) stationäres und in Richtung der Hohlwelle (3) parallel angeordnetes, durch die Vorschubabstützung axial belastetes und dadurch axial längenverformbares, elastisches Element (6),
**gekennzeichnet durch** einen axialen Anschlag (16, 22) zum Begrenzen der Drehbewegung der Hohlwelle (3) bei einem Lösen des Bremszuges (4) beim Erreichen einer bestimmten, **durch** das elastische Element (6) definierten Seilvorspannkraft.

2. Stelleinrichtung nach Anspruch 1,
- mit einem an der Hohlwelle (3) angeordneten Anschlagselement (15).

3. Stelleinrichtung nach Anspruch 1,
- mit einem an einem Antriebsgetrieberad (12) der Hohlwelle (3) angeordneten Anschlagselement (18), welches Antriebsgetrieberad (12) zur Herstellung der Antriebsverbindung mit dem Antrieb (10) dient.

4. Stelleinrichtung nach Anspruch 2 oder 3,
- mit einer Ausbildung von Anschlag (16, 22) und Anschlagelement (15, 18) derart, dass einerseits ein weiteres Lösen des Bremszuges nach Erreichen des Anschlages (16, 22) ausgeschlossen ist und andererseits ein Anziehen des Bremszuges (4) jederzeit möglich ist.

5. Stelleinrichtung nach Anspruch 4,
- mit einer Ausbildung von Anschlag (16, 22) und/oder Anschlagelement (15, 18) nach Art einer Trapezverzahnung.

6. Stelleinrichtung nach einem der Ansprüche 1 bis 5,
- mit einer Ausbildung des Anschlages (16) als ortsfesten, insbesondere gehäusefesten Anschlag.

7. Stelleinrichtung nach einem der Ansprüche 1 bis 5,
- mit einer Ausbildung des Anschlages (22) als axial bewegliches Gegenelement (23).

8. Stelleinrichtung nach Anspruch 7,
- mit einer axialen Vorschubabstützung zwischen dem Gegenelement (23) einerseits und dem Gehäuse (1) andererseits über ein durch die Vorschubabstützung axial belastetes und dadurch axial längenverformbares, weiteres elastisches Element (24).

9. Stelleinrichtung nach Anspruch 7 oder 8,
- mit einer axialen Bewegung des Gegenelements (23) durch die Spindelwelle (5).

10. Stelleinrichtung nach einem der Ansprüche 1 bis 9,
- mit einer Ausbildung des oder der elastischen Elemente (6, 24) als Schraubenfeder.

## Claims

1. Regulating device, in particular a motor vehicle parking brake,
- with a regulating unit (11) having a power-operated drive (10),
- with a telescopic device which can be moved axially in the longitudinal axis of the regulating unit (11) in a housing (1) or the like, comprising a hollow shaft(3) and a spindle shaft (5) being axially connected to said hollow shaft by means of a rotary feed connection and operating a brake pull cable (4),
- with a drive connection (12) between the power-operated drive (10) and the hollow shaft (3),
- with an axial feed support between the hollow shaft (3) on the one hand and the housing (1) on the other hand, via an elastic element (6), which is stationary in relation to the spindle shaft (5) and the brake pull cable (4) and arranged parallel in the direction of the hollow shaft (3), and is axially loaded by the feed support and can thus be longitudinally deformed in an axial fashion, **characterised by**
- an axial stop (16, 22) to restrict the rotation of the hollow shaft (3) when the brake pull cable (4) is released when a specific cable bias force defined by the elastic element (6) is reached.

2. Regulating device according to claim 1,
- with a stop element (15) arranged on the hollow shaft (3).

3. Regulating device according to claim 1,
- with a stop element (18) arranged on a drive transmission wheel (12) of the hollow shaft (3), said drive transmission wheel (12) serving to establish the drive connection with the drive (10).

4. Regulating device according to claim 2 or 3,
- the stop (16, 22) and stop element (15, 22) being configured such that on the one hand further release of the brake pull cable is excluded after reaching the stop (16, 22) and on the other hand tightening of the brake pull cable (4) is possible at any time.

5. Regulating device according to claim 4,
- the stop (16, 22) and/or stop element (15, 18) being configured in the manner of trapezoidal toothing.

6. Regulating device according to one of claims 1 to 5
- the stop (16) being configured as a fixed stop, particularly a stop fixed to the housing.

7. Regulating device according to one of claims 1 to 5,
- the stop (22) being configured as an axially moveable counter-element (23).

8. Regulating device according to claim 7,
- with an axial feed support between the counter-element (23) on the one hand and the housing (1) on the other hand, via a further elastic element (24), which is axially loaded by the feed support and can thus be longitudinally deformed in an axial fashion.

9. Regulating device according to claim 7 or 8,
- with axial movement of the counter-element (23) by means of the spindle shaft (5).

10. Regulating device according to one of claims 1 to 9,
- the elastic element or elements (6, 24) being configured as a spiral spring.

## Revendications

1. Dispositif de réglage, en particulier frein de stationnement d'un véhicule automobile,
comprenant :
- une unité de réglage (11) présentant une transmission (10) commandée par une force étrangère,
- un système télescopique mobile axialement dans un boîtier (1) ou similaire dans l'axe longitudinal de l'unité de réglage (11), présentant un arbre creux (3) et un arbre fuselé (5) qui est en liaison de rotation et d'avancée axiales avec l'arbre creux et actionne un câble de frein (4),
- une liaison d'entraînement (12) entre la transmission (10) commandée par une force étrangère et l'arbre creux (3),
- un support d'avancement axial entre l'arbre creux (3) d'une part et le boîtier (1) d'autre part sur un élément élastique (6), fixe par rapport à l'arbre fuselé (5) et au câble de frein (4) et parallèle en direction de l'arbre creux (3), chargé axialement par le support d'avancement et donc déformable axialement sur la longueur,
**caractérisé par**
une butée axiale (16, 22) destinée à limiter le mouvement de rotation de l'arbre creux (3) lorsque le câble de frein (4) se desserre au moment où une certaine force de précontrainte du câble définie par l'élément élastique (6) est atteinte.

2. Dispositif de réglage selon la revendication 1,
comprenant un élément de butée (15) disposé sur l'arbre creux (3).

3. Dispositif de réglage selon la revendication 1,
comprenant un élément de butée (18) disposé sur une roue d'engrenage de transmission (12) de l'arbre creux (3), cette roue d'engrenage de transmission (12) servant à réaliser la liaison d'entraînement avec la transmission (10).

4. Dispositif de réglage selon la revendication 2 ou 3,
comprenant une réalisation de la butée (16, 22) et de l'élément de butée (15, 18) de manière, d'une part, à exclure tout desserrage supplémentaire du câble de frein une fois que la butée (16, 22) a été atteinte et, d'autre part, à permettre le serrage du câble de frein (4) à tout moment.

5. Dispositif de réglage selon la revendication 4,
consistant à réaliser la butée (16, 22) et/ou l'élément de butée (15, 18) sous la forme d'une denture trapézoïdale.

6. Dispositif de réglage selon l'une des revendications 1 à 5,
consistant à réaliser la butée (16) sous la forme d'une butée fixe, en particulier fixée au boîtier.

7. Dispositif de réglage selon l'une des revendications 1 à 5,
consistant à réaliser la butée (22) sous la forme d'un contre-élément (23) mobile axialement.

8. Dispositif de réglage selon la revendication 7,
comprenant un support d'avancement axial entre le contre-élément (23) d'une part et le boîtier (1) d'autre part sur un autre élément élastique (24) chargé axialement par le support d'avancement et donc déformable axialement sur la longueur.

9. Dispositif de réglage selon la revendication 7 ou 8,
comprenant un mouvement axial du contre-élément (23) réalisé par l'arbre fuselé (5).

10. Dispositif de réglage selon l'une des revendications 1 à 9,
comprenant une réalisation du ou des élément(s) élastique(s) (6, 24) sous la forme de ressorts hélicoïdaux.
